# EUROPÄISCHE PATENTSCHRIFT

(11) **EP 1 615 185 B1**
(45) Veröffentlichungstag und Bekanntmachung des Hinweises auf die Patenterteilung: **05.05.2010**
(21) Anmeldenummer: 05109416.7
(22) Anmeldetag: 08.05.2001
(51) Int. Cl.: G08B 5/00, F21S 8/00, F21Y 101/02, F21W 111/00

(54) **Flugbefeuerungseinrichtung an Windenergieanlagen**
Aicraft beacon device on wind power installations
Dispositif de balisage pour aéronef monté sur des eoliennes

(30) Priorität: 09.05.2000 DE 20008289 U
(43) Veröffentlichungstag der Anmeldung: 11.01.2006
(62) Teilanmeldung aus: 01951485.0
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- WO-A-97/29320
- DE-A1- 19 536 314
- GB-A- 1 383 653
- US-A- 4 620 190
- PATENT ABSTRACTS OF JAPAN Bd. 1999, Nr. 12, 29. Oktober 1999 (1999-10-29) & JP 11 182409 A (NKK CORP), 6. Juli 1999 (1999-07-06)

## Beschreibung

Die vorliegende Erfindung betrifft eine Flugbefeuerungseinrichtung eines Bauwerkes großer Höhe, vorzugsweise eines Turmes einer Windenergieanlage, mit wenigstens einem Leuchtmittel, und mit wenigstens einer Schalteinrichtung, welche das Leuchtmittel schaltet.

Bauwerke ab einer gewissen Höhe müssen je nach Standort und Behördenauflage mit einer sog. Nachtkennzeichnung bzw. Flugbefeuerungseinrichtung zur Flugsicherung ausgestattet werden. Die Nachtkennzeichnung besteht bei einer Gesamthöhe (Rotorblatt in 12.00 Uhr Position) unter 100 m aus einem sog. Hindernisfeuer, während bei einer Gesamthöhe über 100 m ein sog. Gefahrenfeuer notwendig ist.

Eine Hindernisbefeuerung besteht üblicherweise aus zwei Leuchtmitteln (zwei Leuchtkörpern), die nachts permanent leuchten, während das Gefahrenfeuer zwei Blitzleuchten (und zwei Reserveleuchten) aufweist, die im vorgegebenen Rhythmus abwechselnd leuchten. Die Leuchtstärke eines Gefahrenfeuers ist um ein Vielfaches stärker als die Leuchtstärke eines Hindernisfeuers. Je nach Vorgabe muss ebenfalls eine Notstromversorgung vorgesehen werden.

In "Das neue redundant arbeitende Gefahrfeuer wurde weiterentwickelt", Dipl. Ing, Gerd Möller, Reetec GmbH, WIND KRAFT JOURNAL, no, 4, Seiten 20 und 21, Ausgabe 4/99, wird ein Verfahren zum Betreiben eines Gefahrfeuers auf einer Windenergieanlage beschrieben. Hierbei weist die Windenergieanlage Leuchtmittel sowie eine Einrichtung zur Erfassung des Helligkeitswertes auf. In Abhängigkeit von einem Helligkeitswert werden die Leuchtmittel aktiviert oder deaktiviert. Die Windenergieanlage weist ferner eine Synchronisationseinrichtung zum Synchronisieren von verschiedenen Leuchtmitteln der Windenergieanlage auf.

Aufgabe der Erfindung ist es, eine Flugbefeuerungseinrichtung von Windenergieanlagen zu verbessern und insbesondere deren Betrieb so effektiv wie möglich zu gestalten.

Erfindungsgemäß wird ein Windpack gemäß Anspruch 1 beansprucht.

Zum ersten ist es sinnvoll, die Hindernisbefeuerung wie aber auch die Gefahrenbefeuerung erst dann zu aktivieren, wenn die gesamte Umgebung einen bestimmten Helligkeitswert angenommen hat. Ein solcher Helligkeitswert lässt sich durch einen Dämmerungsschalter feststellen, der auf einen vorbestimmten Helligkeitswert eingestellt wird und die Flugbefeuerung wird aktiviert, wenn ein bestimmter Helligkeitswert erreicht (unterschritten) wird.

Mit einem solchen Dämmerungsschalter lässt sich das unnötige Einschalten der Flugbefeuerung vermeiden, so dass die gesamte Lebensdauer der Leuchtmittel verlängert wird, wobei immer noch eine ausreichende Sicherheit gewährleistet wird.

Eine weitere Ausführung der Erfindung besteht darin, dass die Windenergieanlage mit einem Sichtweitenmessgerät ausgestattet ist. Mit Hilfe dieses Messgerätes lässt sich die Sichtweite erfassen, was insbesondere bei Nebel oder anderen ungünstigen Wetterlagen (starker Regen) sinnvoll ist. Wird mittels des Sichtweitenmessgerätes das Unterschreiten einer bestimmten Sichtweite (die kritische Sichtweite kann eingestellt werden) festgestellt, wird ebenfalls die Flugbefeuerung aktiviert, so dass stets eine ausreichende Bauwerkssicherheit gegeben ist.

Werden mehrere Windenergieanlagen zusammen aufgestellt, was regelmäßig in Windparks der Fall ist, und müssen diese Windenergieanlagen aufgrund ihrer großen Höhe mit einer Gefahrenbefeuerung ausgestattet werden, ist es für den Flug- und Autoverkehr oftmals sehr störend/irritierend, wenn die Gefahrenfeuer an jeder einzelnen Windenergieanlage zu unterschiedlichen Zeiten aufblitzen (d. h. also eingeschaltet bzw. ausgeschaltet werden). Hierzu sieht die Erfindung die Ausbildung einer Synchronisationseinrichtung vor, mittels der die Blitzleuchten derart synchronisiert werden, dass sämtliche Blitzleuchten aller Windenergieanlagen eines Windparks zur gleichen Zeit aufblitzen (d. h. also an- bzw. ausgeschaltet werden). Die Synchronisation erfolgt hierbei über Funk- und/oder Datensignale und die Synchronisationseinrichtung besteht aus einer Datenverarbeitungseinrichtung, die gekoppelt mit einem Uhrwerk die Anschalt- bzw. Ausschaltsignale der Blitzleuchten generiert, so dass der Zweck erreicht wird.

Eine Flugbefeuerungseinrichtung muss bei einer Windenergieanlage so sicher ausgelegt sein, dass sie ihre Funktionstüchtigkeit auch noch dann aufweist, wenn die gesamte Windenergieanlage vom elektrischen Netz abgenommen ist bzw. der Rotor der Windenergieanlage stillsteht. Deshalb wird eine Notstromversorgungseinrichtung für eine Windenergieanlage und deren Flugbefeuerung vorgeschlagen, so dass zumindest für eine Nacht die Flugbefeuerung aufrechterhalten werden kann. Hierzu ist bei der Windenergieanlage ein (bevorzugt klimatisierter) Schaltschrank vorgesehen, in dem die gesamten Steuerungseinrichtungen für die Flugbefeuerung angeordnet sind und zudem auch noch Batterien bzw. Akkumulatoren, die die notwendige Energie für die Flugbefeuerung liefern. Diese Batterien bzw. Akkumulatoren sind bevorzugt absolut wartungsfrei.

Für mehrere Windenergieanlagen eines Windparks kann auch ein zentraler Schaltschrank für Notstrom und Steuerung der Flugbefeuerung vorgesehen werden.

Die Flugbefeuerungseinrichtung steuert nicht nur die jeweilige Flugbefeuerung (Hindernisbefeuerung, Gefahrenfeuer), sondern überwacht auch noch die Störung verschiedener Einrichtungen wie den Ausfall der Versorgungsspannung, den Ausfall einer Lampe, Störung des Dämmerungsschalters, Störung von Batterien bzw. des Ladegerätes zum Aufladen der Akkumulatoren, Störung der Klimatisierung des Schaltschranks, den Ausfall der Sichtweitenmessung (falls diese vorhanden ist) sowie die Störung der Synchronisierung (nur bei Gefahrenbefeuerung).

Wird eine solche Störmeldung festgestellt, wird diese automatisch über die Anbindung an die Anlagensteuerung an eine Zentrale weitergeleitet. Die Übermittlung der Störmeldung an die Zentrale kann mittels Fax, SMS oder auch E-Mail erfolgen.

Die Gefahrenbefeuerung besteht aus je zwei Haupt- und zwei Reserveleuchten. Die Lichtstärke der Blitze beträgt mehr als 1600 cd/Blitz. Die Blitze befinden sich in einem Gehäuse der Schutzart IP 67. Als Leuchtmittel ist hier ein Xenonblitzrohr mit einer Nennlebensdauer von ca. 2.000.000 Blitzen (entspricht ca. 12 Monaten).

Fällt eine Hauptblitzleuchte aus, wird automatisch auf das redundante zweite System (Reserveleuchte) umgeschaltet und eine Störmeldung an die Zentrale abgesetzt.

Die Hindernisbefeuerung besteht aus zwei Hindernisleuchten und ist bevorzugt mit Leuchtmitteln aus LEDs ausgeführt. Die Leuchtmittel befinden sich in einem Gehäuse der Schutzart IP 67. Da die Betriebsdauer er oben beschriebenen Hindernisleuchten erfasst wird, ist bei diesem Aufbau kein redundantes System notwendig. Durch den Einsatz von LED-Leuchtmitteln ist der Stromverbrauch sehr gering und die Lebensdauer mit mindestens 10 Jahren sehr hoch.

Ein weiterer Aspekt der Erfindung befasst sich damit, dass insbesondere bei Baustellen, z. B. für Windenergieanlagen, auf denen der Turm der Windenergieanlage bereits errichtet ist, das Maschinenhaus, der Rotor, der Generator und die elektrischen Installationen jedoch noch nicht vorhanden sind, eine Flugbefeuerungseinrichtung fehlt, obwohl der Turm durchaus ein Flughindernis bzw. einen Gefahrenpunkt bildet.

Zur Lösung dieses Problems wird erfindungsgemäß eine Flugbefeuerungseinrichtung vorgeschlagen, welche über eine transportable Energieversorgung verfügt. Durch eine solche autarke, von einer festen Installation unabhängige, Energieversorgung kann jedes Bauwerk bei Bedarf mit einer Flugbefeuerungseinrichtung ausgestattet werden. Dies ermöglicht die im Interesse der Flugsicherheit erforderliche Kennzeichnung dieses Bauwerkes auch dann, wenn eine Stromversorgung dieses Bauwerkes (noch) nicht hergestellt ist.

In bevorzugten Weiterbildungen dieser Erfindung kann eine erfindungsgemäße Flugbefeuerungseinrichtung über folgende Merkmale verfügen, die allein oder in Kombinationen ausgebildet sein können.

Durch Verwendung von Dämmerungsschaltern kann die mögliche Betriebszeit verlängert werden.

Als Energiespeicher kommen Akkumulatoren und/oder Kondensatoren z. B. vom Typ "Ultracap" in Betracht. Zur Ergänzung des Energievorrates können z. B. fotovoltaische Module und/oder ein transportabler Generator mit einem Rotor zur Umwandlung von Windenergie in elektrische Energie vorgesehen sein. Sowohl das Fotovoltaik-Modul wie auch der Generator liefern zwar nur eine begrenzte Energiemenge, diese kann jedoch z. B. über eine geeignete Steuerung wie einen Laderegler kontinuierlich in die Energiespeicher eingespeist und bei Bedarf entnommen werden. So ist bei geeigneter Auslegung der Energiespeicher theoretisch ein zeitlich unbegrenzter Betrieb möglich.

Um die Lebensdauer von Akkumulatoren zu erhöhen und deren Tiefst-Entladung zu vermeiden, kann bevorzugt ein sogenannter Akkuwächter vorgesehen sein, der bei Erreichen einer vorgebbaren unteren Klemmenspannung des/der Akkus die Energieentnahme unterbindet.

Neben der Überwachung der einzelnen Komponenten kann eine Einrichtung vorgesehen sein, welche im Falle einer Störung eine Störungsmeldung z. B. zu einer vorgegebenen Zentrale absetzt. Eine solche Einrichtung umfasst bevorzugt ein GSM-Modul, das z. B. über eine Funkverbindung eine Kurzmitteilung (SMS) absetzen kann, die den Empfänger auf die Störung hinweist.

Darüber hinaus kann ein Transportbehälter vorgesehen sein, in dem die einzelnen Komponenten der Flugbefeuerungseinrichtung, wie Akkumulatoren, Schalteinrichtung, GSM-Modul, Laderegler, Akkuwächter, etc. untergebracht sind. Dabei können die Leuchten bevorzugt auf dem Deckel dieser Transportvorrichtung angebracht sein, so dass die gesamte erfindungsgemäße Flugbefeuerungseinrichtung als eine Einheit handhabbar ist.

Besonders bevorzugt sind in dem Transportbehälter weiterhin Halter für die im Betrieb notwendig außerhalb des Behälters angeordneten Teile der Flugbefeuerungseinrichtung, wie z. B. das Fotovoltaik-Modul und/oder den Generator vorgesehen, so dass diese für den Transport ebenfalls in dem Transportbehälter untergebracht werden und daher nicht verloren gehen können.

Dabei können der Generator und/oder das Fotovoltaik-Modul während des Betriebes an dem Transportbehälter befestigt sein bzw. von diesem abgesetzt an günstigen Stellen an der Spitze des Turmes befestigt sein. Diese Befestigung kann wiederum über geeignete Halter (Flansche) erfolgen.

Sofern der Transportbehälter eine ausreichende Höhe aufweist, können auch die Leuchten während des Transportes in diesem Behälter gestaut werden, so dass sie einerseits nicht verloren gehen können und andererseits auch vor Beschädigungen geschützt sind. Dazu ist der Deckel des Behälters vorteilhaft derart ausgebildet, dass er sowohl mit den daran angebrachten Leuchten aufwärts weisend, wie auch mit den daran angebrachten Leuchten abwärts weisend den Behälter dicht verschließt und so dessen Innenraum zuverlässig vor Witterungseinflüssen schützt.

Um eine einfache Handhabung zu verwirklichen, wird die elektrische Verbindung zwischen der Schalteinrichtung bzw. der Umschaltvorrichtung bevorzugt durch eine lösbare Kabelverbindung hergestellt. Dabei ist die Kabelverbindung bevorzugt an der Schalteinrichtung mit einem oder mehreren Verbindern lösbar.

Die obere Abdeckung des Transportbehälters, an welcher die Leuchten vorgesehen sind, weist ein Fach auf, welches das Verbindungskabel zwischen den Leuchten und der Schalteinrichtung aufnimmt. Dieses Fach kann eine Abdeckung aufweisen, welche das Fach in der Transportposition des Behälterdeckels mit in den Behälter hinein ragenden Leuchten verschließt.

Zur Synchronisierung mehrerer Flugbefeuerungseinrichtungen können diese über einen Funkempfänger verfügen, der Signale eines zentralen Senders wie des DCF-Senders der Physikalisch-Technischen Bundesanstalt empfängt und zu vorgegebenen Zeitpunkten, die sich aus dem Funksignal ableiten lassen, bestimmte Schaltvorgänge wie Blinkimpulse für die Leuchten, auslöst. Alternativ zu einem DCF- Empfänger können natürlich auch mehrere räumlich benachbarte Flugbefeuerungseinrichtungen über Funksignale einer vorgebbaren Sendestation wie z. B. einer Master-Anlage gesteuert werden.

In den Figuren sind Ausführungsbeispiele der Erfindung dargestellt. Dabei zeigen
- Fig. 1: die Frontal- bzw, Seitenansicht einer Windenergieanlage mit einem erfindungsgemäßen Hindernis- oder Gefahrenfeuer,
- Fig. 2: eine erste Ausführungsform einer transportablen Energiequelle zur Energieversorgung einer Flugbefeuerungseinrichtung;
- Fig. 3: eine alternative Ausführungsform einer transportablen Energiequelle; und
- Fig. 4: eine Detailansicht einer Abdeckung eines Transportbehälters.

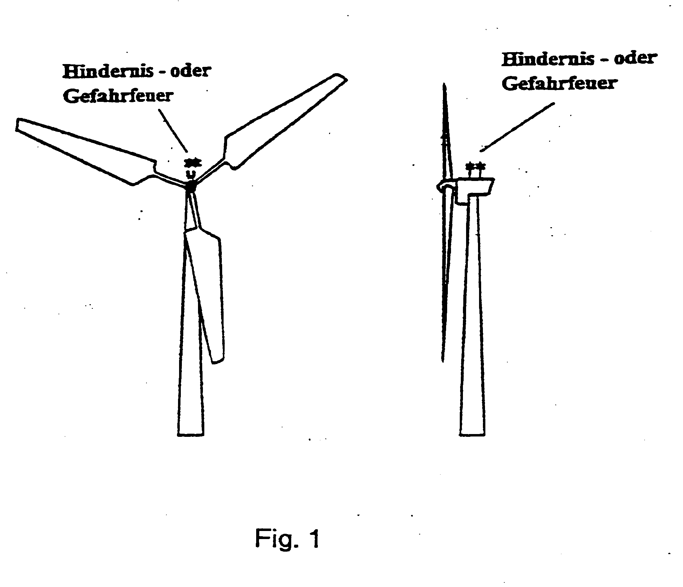

Fig. 1 zeigt in einer Skizze die Frontal- bzw. Seitenansicht einer Windenergieanlage mit einem erfindungsgemäßen Hindernis- oder Gefahrenfeuer. Dieses Hindernis- und/oder Gefahrenfeuer ist auf der Gondel anbeordnet.

Bei der Ausbildung als Gefahrenfeuer blinken diese 20 bis 60 mal pro Minute. Ihre Einschaltzeit während der Blinkphase ist länger als die Dunkelphase. Es können auch rote Blitzfeuer eingesetzt werden. Die Blinkfrequenz soll zwischen 20 und 60 mal pro Minute liegen. Im Übrigen hat ein Hindernis- oder Gefahrenfeuer den Richtlinien für die Kennzeichnung von Luftfahrthindernissen des Bundesministeriums für Verkehr, Bau- und Wohnungswesen vom 22. Dezember 1999 (Gefahrfeuerverordnung) zu genügen.

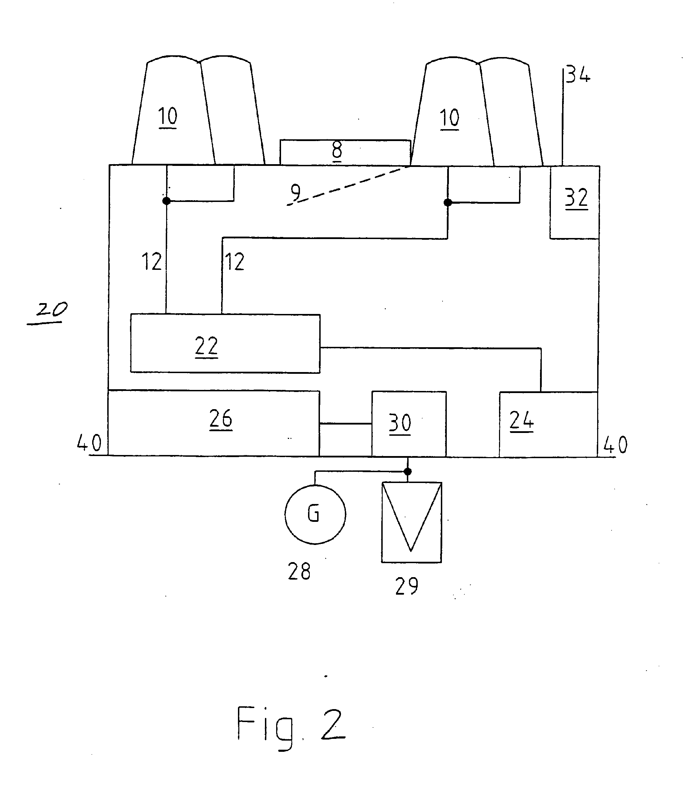

Figur 2 zeigt einen Transportbehälter 20 mit einer Schalteinrichtung 22, in welche eine Leuchtenüberwachung integriert sein kann, Diese Schalteinrichtung 22 steuert Leuchten 10 in einer vorgebbaren Weise an, die z. B. durch eine feste Verdrahtung oder durch eine Mikroprozessorsteuerung vorgegeben sein kann. Weiterhin kann die Schalteinrichtung durch externe Signale beeinflusst werden. Diese können von einem Dämmerungsschalter 24 stammen.

Ein solcher Dämmerungsschalter 24 ist vorgesehen, um abhängig von der Umgebungshelligkeit die erfindungsgemäße Flugbefeuerungseinrichtung zu beeinflussen. Diese Beeinflussung kann das Ein- bzw. Ausschalten der Flugbefeuerungseinrichtung bei einer bestimmten Umgebungshelligkeit sein.

Zur Stromversorgung der gesamten Flugbefeuerungseinrichtung ist ein Energiespeicher 26 vorgesehen, der aus Akkumulatoren und/oder Kondensatoren oder ähnlichem gebildet sein kann. Dieser Energiespeicher 26 kann durch einen Generator zum Umwandeln von Windenergie in elektrische Energie 28 und/oder ein Fotovoltaik-Modul 29 gespeist werden, die über einen Laderegler 30 mit dem Energiespeicher 26 verbunden sind. Dieser Laderegler 30 bewirkt eine Ladung der Akkumulatoren bzw. Kondensatoren mit geeigneten Spannungen und Strömen,

Der Generator 28 und das Fotovoltaik-Modul 29 weisen derartige Abmessungen auf, dass sie für den Transport der Flugbefeuerungseinrichtung in dem Transportbehälter 20 untergebracht werden können, Dadurch sind sie während des Transportes vor Schäden geschützt und können nicht verloren gehen, so dass stets alle Komponenten der Flugbefeuerungseinrichtung vorhanden sind.

In dieser Figur 2 sind auf dem Transportbehälter 20 je zwei Leuchtenpaare 10 angebracht, von denen eines das Haupt-Leuchtenpaar und das andere das Reserve-Leuchtenpaar ist. Weiterhin befindet sich auf dem Transportbehälter 20 eine Antenne 34, die mit einem in dem Behälter angeordneten GSM-Modul 32 verbunden ist. Über dieses GSM-Modul 32 können z. B. im Falle von Störungen entsprechende Störungsmaldungen zu vorgegebenen Empfängern abgesetzt werden.

Um eine Befestigung der Flugbefeuerungseinrichtung an dem Turm zu ermöglichen, sind Befestigungsflansche 40 an dem Transportbehälter 20 vorgesehen, durch die er mit Schrauben am Turm befestigt werden kann.

Die elektrische Verbindung zwischen der Schalteinrichtung 22 und den Leuchten 10 wird durch Kabel 12 hergestellt. Diese Kabel 12 sind bevorzugt an der Schalteinrichtung 22 lösbar, so dass die Abdeckung des Transportbehälters 20 mit den daran angebrachten Leuchten 10 einschließlich der elektrischen Verbindungen vollständig von dem Transportbehälter 20 gelöst werden kann.

Zum Transport der Flugbefeuerungseinrichtung kann der Deckel mit den daran angebrachten Leuchten 10 dann so auf den Transportbehälter 20 aufgesetzt werden, dass die Leuchten 10 sich im Inneren des Transportbehälters 20 befinden. In dieser Einbausituation des Deckels befinden sich nunmehr die Kabel 12 an der Außenseite des Transportbehälters 20. Um die Kabel 12 zu schützen, können diese in einem Fach 8 verstaut werden, das mit einem Deckel 9 verschließbar ist.

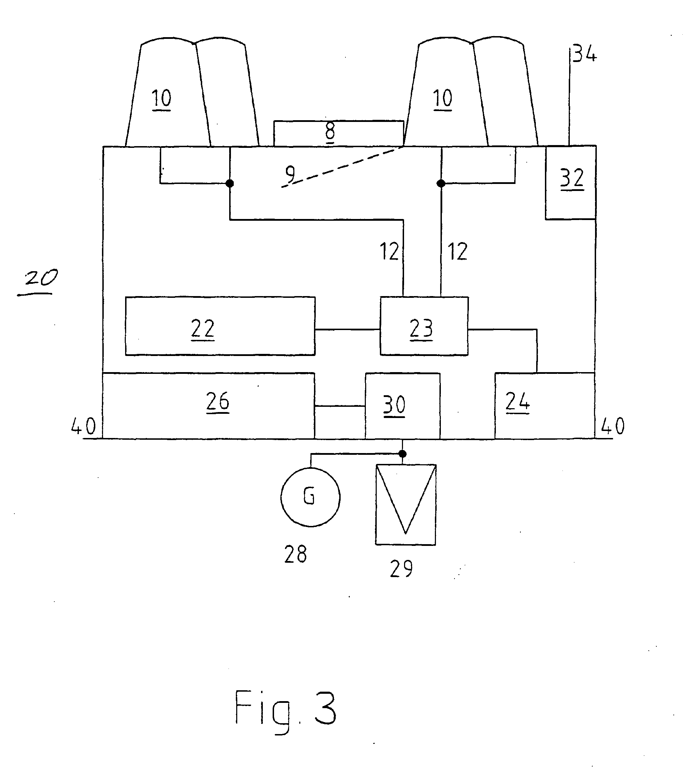

Figur 3 entspricht im Wesentlichen Figur 2. Der Unterschied besteht darin, dass hier eine Umschaltvorrichtung 23 vorgesehen ist. Diese Umschaltvorrichtung 23 empfängt die Signale zur Ansteuerung der Leuchten 10 von der Schalteinrichtung 22 und leitet sie weiter zu den Leuchten 10. Weiterhin wird die Umschalteinrichtung 23 von dem Dämmerungsschalter 24 beeinflusst. Dabei wird die Umschalteinrichtung so gesteuert, dass abhängig von der Umgebungshelligkeit jeweils eines der beiden Leuchtenpaare 10 mit den Signalen der Schalteinrichtung 22 beaufschlagt wird.

Wenn verschiedenfarbige Leuchten 10 vorgesehen sind, z. B. rote Leuchten für die Nacht-Befeuerung und weiße Leuchten für die Tag-Befeuerung, kann der Dämmerungsschalter 24 alternativ dazu verwendet werden, die Umschaltung zwischen Tag- und Nacht-Befeuerung abhängig von der Umgebungshelligkeit vorzunehmen. Natürlich kann die für die Umschaltung zwischen Tag-Befeuerung und Nacht-Befeuerung erforderliche Umschaltvorrichtung in die Schalteinrichtung 22 integriert sein.

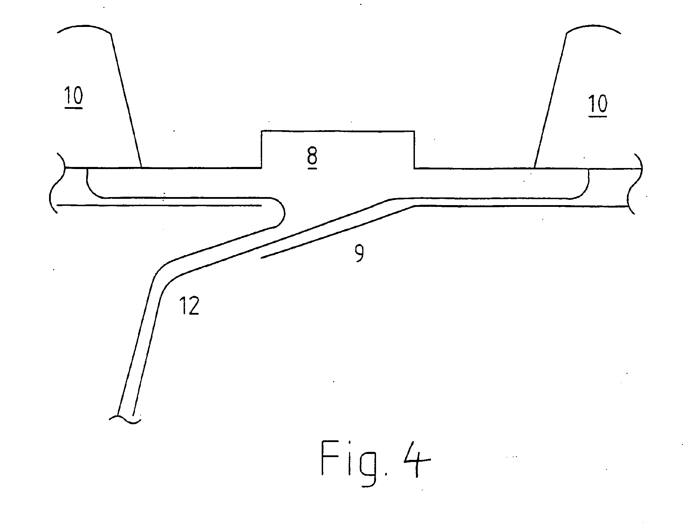

Figur 4 zeigt eine Detaildarstellung einer möglichen Kabelführung. Die Kabel 12 sind an den Leuchten 10 angebracht. Im Betrieb ist die in den Transportbehälter hinein weisende Klappe 9 offen und die Kabel 12 können mit der Schalteinrichtung 22 oder der Umschaltvorrichtung 23 verbunden werden.

Für den Transport der Flugbefeuerung wird die Abdeckung so gedreht, dass die Leuchten 10 abwärts (in den Transportbehälter hinein) weisen. Die jetzt an der Oberseite befindlichen Kabel 12 sind dann ungeschützt, soweit sie nicht in dem Fach 8 aufgenommen sind. Um eine Beschädigung der Kabel 12 zu verhindern, können sie innerhalb eines zweischaligen Deckels verlegt sein, und im Bereich der Abdeckung für das Fach 9 aus dem Deckel heraustreten und zu der Schalteinrichtung 22 bzw. der Umschaltvorrichtung 23 geführt werden.

Für den Transport können die Kabel 12 in dem Fach 8 verstaut werden. Dabei kann die Abdeckung 9, die sich während des Transportes an der Außenseite des Transportbehälters befindet, das Fach 8 sowie den Innenraum des zweischaligen Deckels vor Verunreinigungen und Beschädigungen schützen.

## Patentansprüche

1. Windpark bestehend aus mehreren Windenergieanlagen, wobei einzelne Windenergieanlagen des Windparks mit einer Flugbefeuerungseinrichtung ausgestattet sind, wobei zumindest eine der Flugbefeuerungseinrichtungen aufweist:
- mindestens ein als Blitzleuchte ausgebildetes Leuchtmittel (10),
- eine Einrichtung (24) zur Erfassung eines Helligkeitswerts in der Umgebung der Flugbefeuerungseinrichtung,
- eine Schalteinrichtung (22), welche mit der Einrichtung zum Erfassen des Helligkeitswertes verbunden ist, wobei die Schalteinrichtung (22) die gemessenen Daten der Einrichtung (24) zum Erfassen des Helligkeitswertes auswertet und die Leuchtmittel (10) einschaltet, wenn ein bestimmter Helligkeitswert unterschritten wird,
- eine Synchronisationseinrichtung, mittels der die Leuchtmittel (10) der Flugbefeuerungseinrichtung verschiedener Windenergieanlagen derart synchronisiert werden, dass die Leuchtmittel (10) der Windenergieanlagen eines Windparks zur gleichen Zeit an- bzw. ausgeschaltet sind,
**dadurch gekennzeichnet, dass** die Synchronisationseinrichtung aus einer Datenverarbeitungseinrichtung besteht, die gekoppelt mit einem Uhrwerk die Anschalt- bzw. Ausschaltsignale der Leuchtmittel der Flugbefeuerungseinrichtung mittels Funk- und/oder Datensignalen generiert.

2. Windpark nach Anspruch 1, wobei eine Sichtweitenmesseinrichtung vorgesehen ist, mittels welcher die Leuchtmittel (10) der Flugbefeuerungseinrichtung aktiviert werden, wenn eine vorbestimmte Sichtweite unterschritten wird.

3. Windpark nach Anspruch 1 oder 2, wobei Leuchtmittel (10) eine Vielzahl von LED (Licht emittierende Dioden) aufweisen.

4. Windpark nach einem der Ansprüche 1 bis 3, wobei die Flugbefeuerungseinrichtung eine transportable Energiequelle (26) zur Energieversorgung des Leuchtmittels (10) und der Schalteinrichtung (22) aufweist.

5. Windpark nach Anspruch 4, ferner mit einem Energie-Zwischenspeicher (26), der mit einer Energieerzeugungseinrichtung (28, 29) koppelbar ist.

6. Windpark nach Anspruch 4, ferner mit einem GSM-Modul (32) zum Übermitteln von Störungsmeldungen.

7. Windpark nach Anspruch 4, wobei das Leuchtmittel (10) an einem Transportbehälter (20) befestigbar ist.

8. Windpark nach Anspruch 7, wobei die Höhe des Transportbehälters (20) so bemessen ist, dass zwischen den Einbauten in dem Transportbehälter (20) und dem Rand des Transportbehälters (20) wenigstens die Höhe des Leuchtmittels (10) frei bleibt.

9. Windpark nach Anspruch 4, wobei das Leuchtmittel (10) wenigstens während des Betriebes der Flugbefeuerungseinrichtung getrennt von dem Transportbehälter (20) anordbar ist.

10. Windpark nach Anspruch 4, ferner mit einer wenigstens einseitig lösbaren elektrischen Verbindung zwischen dem Leuchtmittel (10) und der Schalteinrichtung (22) bzw. der Umschaltvorrichtung.

11. Windpark nach Anspruch 4, ferner mit einem Aufnahmefach (8) für Kabel.

12. Windpark nach einem der vorstehenden Ansprüche, wobei die Schalteinrichtung (22) und/oder der Dämmerungsschalter (24) mit dem Leuchtmittel (10) zusammengefasst sind.

13. Windpark nach einem der vorstehenden Ansprüche, wobei mindestens zwei verschiedenfarbige Leuchtmittel (10) vorgesehen sind.

14. Windpark nach Anspruch 13, mit einer Umschaltvorrichtung, welche jeweils die Leuchtmittel (10) gleicher Farbe an die Schalteinrichtung (22) abschließt.

15. Windpark nach Anspruch 14, wobei der Dämmerungsschalter (24) mit der Umschaltvorrichtung zusammenwirkt.

16. Windpark nach einem der vorstehenden Ansprüche, mit einer Empfangsvorrichtung für Funksignale, welche mit dem Dämmerungsschalter (24) und/oder der Schalteinrichtung (22) zusammenwirkt.

## Claims

1. A wind farm comprising a plurality of wind power installations, wherein individual wind power installations of the wind farm are provided with a flight navigation device, wherein at least one of the flight navigation devices has:
- at least one lighting means (10) designed in the form of a flashing light,
- a device (24) for detecting a brightness value in the vicinity of the flight navigation device,
- a switching device (22) which is connected to the device for detecting the brightness value, wherein the switching device (22) evaluates the measured data of the device (24) for detecting the brightness value and switches on the lighting means (10) if a pre-determined brightness value falls below a given value,
- a synchronization device, by means of which the lighting means (10) of the flight navigation device of different wind power installations are synchronized in such a way that the lighting means (10) of the wind power installations of a wind farm are switched on or off at the same time,
**characterized in that** the synchronization device comprises a data-processing device, which coupled to a timer, generates the switch-on and switch-off signals of the lighting means of the flight navigation device by means of radio and/or data signals.

2. A wind farm according to Claim 1, wherein a visual-range meter is provided, by means of which the lighting means (10) of the flight navigation device are activated when the visual range drops below a pre-determined level.

3. A wind farm according to any Claim 1 or 2, wherein the lighting means (10) have a plurality of LEDs (light-emitting diodes).

4. A wind farm according to any one of Claims 1 to 3, wherein the flight navigation device has a transportable energy source (26) for supplying power to the lighting means (10) and the switching device (22).

5. A wind farm according to Claim 4, in addition with an intermediate energy store (26) which is capable of being coupled to a power-generating device (28, 29).

6. A wind farm according to Claim 4, in addition with a GSM module (32) for transmitting error messages.

7. A wind farm according to Claim 4, wherein the lighting means (10) is capable of being fastened to a transportation container (20).

8. A wind farm according to Claim 7, wherein the height of the transportation container (20) is dimensioned to be such that at least the height of the lighting means (10) remains free between the fittings in the transportation container (20) and the edge of the transportation container (20).

9. A wind farm according to Claim 4, wherein the lighting means (10) is capable of being arranged separately from the transportation container (20), at least during the operation of the flight navigation device.

10. A wind farm according to Claim 4, in addition with an electrical connexion releasable on at least one side between the lighting means (10) and the switching device (22) or the change-over switching device respectively.

11. A wind farm according to Claim 4, in addition with a receiving compartment (8) for cables.

12. A wind farm according to any one of the preceding Claims, wherein the switching device (22) and/or the daylight-control switch (24) is or are combined with the lighting means (10).

13. A wind farm according to any one of the preceding Claims, wherein at least two different-coloured lighting means (10) are provided.

14. A wind farm according to Claim 13, with a change-over switching device which connects the lighting means (10) of the same colour to the switching device (22) in each case.

15. A wind farm according to Claim 14, wherein the daylight-control switch (24) works together with the change-over switching device.

16. A wind farm according to any one of the preceding Claims, with a receiving device for radio signals, which works together with the daylight-control switch (24) and/or the switching device (22).

## Revendications

1. Parc éolien se composant de plusieurs éoliennes, dans lequel des éoliennes individuelles du parc éolien sont équipées d'un dispositif de balisage pour aéronef, au moins l'un des dispositifs de balisage pour aéronef présentant :
- au moins un moyen d'éclairage (10) réalisé comme une lampe à éclair,
- un dispositif (24) de détection d'une valeur de luminosité dans les environs du dispositif de balisage pour aéronef,
- un dispositif de connexion (22) qui est relié au dispositif de détection de la valeur de luminosité, le dispositif de connexion (22) évaluant les données mesurées du dispositif (24) de détection de la valeur de luminosité et activant les moyens d'éclairage (10) si une valeur de luminosité déterminée n'est pas dépassée,
- un dispositif de synchronisation permettant de synchroniser les moyens d'éclairage (10) du dispositif de balisage pour aéronef de différentes éoliennes de telle sorte que les moyens d'éclairage (10) des éoliennes d'un parc éolien soient connectés ou déconnectés en même temps,
**caractérisé en ce que** le dispositif de synchronisation se compose d'un dispositif de traitement de données qui génère de manière couplée à un mécanisme d'horloge les signaux de connexion ou de déconnexion des moyens d'éclairage du dispositif de balisage pour aéronef au moyen de signaux radio et/ou de données.

2. Parc éolien selon la revendication 1, dans lequel un dispositif de mesure de la visibilité est prévu, au moyen duquel les moyens d'éclairage (10) du dispositif de balisage pour aéronef sont activés si une visibilité prédéterminée n'est pas dépassée.

3. Parc éolien selon la revendication 1 ou 2, dans lequel des moyens d'éclairage (10) présentent une pluralité de LED (diodes électroluminescentes).

4. Parc éolien selon l'une quelconque des revendications 1 à 3, dans lequel le dispositif de balisage pour aéronef présente une source d'énergie (26) transportable pour l'alimentation en énergie du moyen d'éclairage (10) et du dispositif de connexion (22).

5. Parc éolien selon la revendication 4, avec en outre un accumulateur intermédiaire d'énergie (26) qui peut être couplé à un dispositif de production d'énergie (28, 29).

6. Parc éolien selon la revendication 4, avec en outre un module GSM (32) pour la transmission de messages d'erreur.

7. Parc éolien selon la revendication 4, dans lequel le moyen d'éclairage (10) est apte à être fixé sur un conteneur (20).

8. Parc éolien selon la revendication 7, dans lequel la hauteur du conteneur (20) est dimensionnée de telle sorte qu'entre les objets installés dans le conteneur (20) et le bord du conteneur (20), au moins la hauteur du moyen d'éclairage (10) reste libre.

9. Parc éolien selon la revendication 4, dans lequel le moyen d'éclairage (10) est apte à être disposé au moins pendant le fonctionnement du dispositif de balisage pour aéronef séparément du conteneur (20).

10. Parc éolien selon la revendication 4, avec en outre une liaison électrique, amovible au moins d'un côté, entre le moyen d'éclairage (10) et le dispositif de connexion (22) ou le dispositif de commutation.

11. Parc éolien selon la revendication 4, avec en outre un compartiment de réception (6) pour des câbles.

12. Parc éolien selon l'une quelconque des revendications précédentes, dans lequel le dispositif de connexion (22) et/ou l'interrupteur crépusculaire (24) sont regroupés avec le moyen d'éclairage (10).

13. Parc éolien selon l'une quelconque des revendications précédentes, dans lequel au moins deux moyens d'éclairage (10) de différentes couleurs sont prévus.

14. Parc éolien selon la revendication 13, avec un dispositif de commutation qui raccorde respectivement les moyens d'éclairage (10) de même couleur au dispositif de connexion (22).

15. Parc éolien selon la revendication 14, dans lequel l'interrupteur crépusculaire (24) coopère avec le dispositif de commutation.

16. Parc éolien selon l'une quelconque des revendications précédentes, avec un dispositif de réception de signaux radio qui coopère avec l'interrupteur crépusculaire (24) et/ou le dispositif de connexion (22).
